**Europäisches Patentamt**

**European Patent Office**

**Office européen des brevets**

(19)

(11) Veröffentlichungsnummer: **0 176 764**
**B1**

(12) **EUROPÄISCHE PATENTSCHRIFT**

(45) Veröffentlichungstag der Patentschrift:
31.05.89

(21) Anmeldenummer: **85110819.1**

(22) Anmeldetag: **28.08.85**

(51) Int. Cl.⁴: **H 04 M 3/36**, H 04 Q 11/04,
H 04 Q 3/545

(54) Schaltungsanordnung für Fernmeldeanlagen, insbesondere Fernsprechvermittlungsanlagen, mit zentralen und/oder dezentralen informationsverarbeitenden Schaltwerken.

(30) Priorität: **28.09.84 DE 3435720**

(43) Veröffentlichungstag der Anmeldung:
**09.04.86 Patentblatt 86/15**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**DE-A-3 328 575**

**9th INTERNATIONAL TELETRAFFIC CONGRESS,
Oktober 1979, Seiten ITC-9.1/7, Torremolinos, ES; P.
SOMOZA et al.: "Dynamic processor overload
control and its implementation in certain singleprocessor and multiprocessor SPC systems"**

(73) Patentinhaber: **Siemens Aktiengesellschaft Berlin
und München, Wittelsbacherplatz 2, D-8000
München 2 (DE)**

(72) Erfinder: **Pohl, Siegfried, Dr.- Ing., Hirschplanallee
7, D-8042 Oberschleissheim (DE)**

## Beschreibung

Durch einen Vortrag, der auf dem 9. International Teletraffic Congress (ITC) im Oktober 1979 in Torremolinos/Spanien (Konferenzpapier ITC-9 von Somoza/Guerrero 1 - 7) gehalten wurde (in diesem Zusammenhang ist auch auf die Zeitschrift "IEEE Transactions on Communications", September 1973, Seite 1027 ff, hinzuweisen), ist eine Schaltungsanordnung für Fernmeldeanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit bekannt geworden, sowie mit Meßeinrichtungen zur Bestimmung der Belastbarkeit solcher Schaltwerke, die die stets schwankende Belastung über Zeiträume integrieren, die jeweils groß genug sind, um ein Bestimmungsergebnis mit ausreichender Ergebnisgenauigkeit zu gewährleisten, sowie mit einer Zähleinrichtung zur Ermittlung der Informationsverarbeitungs-Verkehrsbelastung jeweils eines Schaltwerkes, zur Erkennung und zur Abwehr solcher Überlastungen, wobei diese Zähleinrichtung mit möglichst geringem Zeitverzug einen jeweils aktuellen und durch Vergleich eines Zählergebnisses mit dem von ihr empfangenen und in ihr gespeicherten Bestimmungsergebnis ermittelten Momentanwert der Informations-Verkehrsbelastung liefern, um die Abwehr von Überlastungen verzögerungsarm zu realisieren.

In einer Schaltungsanordnung dieser Art wird also unterschieden zwischen einer Belastbarkeitsmessung einerseits, die ein die Belastbarkeit eines zentralen Schaltwerkes betreffendes Bestimmungsergebnis liefert, und einer Informationsverarbeitungs-Verkehrsbelastungsermittlung andererseits, die den jeweils aktuellen Stand der Belastungssituation angibt. Während das Bestimmungsergebnis Kurzzeitschwankungen in der Belastung nivelliert, soll das Ergebnis der laufenden Informationsverarbeitungs-Verkehrsbelastungsermittlung möglichst aktuell sein, also jeweils ein Ergebnis liefern, in welchem die laufenden Belastungsschwankungen zum Ausdruck kommen. Das genannte Bestimmungsergebnis der Belastbarkeitsmessung gibt eine Meßgröße an, mit der das laufend ermittelte aktuelle Ergebnis der Informationsverarbeitungs-Verkehrsbelastung verglichen wird. Das Ergebnis der Belastbarkeitsmessung ist ein Richtwert, also ein Soll-Wert, dafür, welche Verkehrsbelastung einem zentralen Steuerwerk zugeführt werden soll. Das Ergebnis der Informationsverarbeituings-Verkehrsbelastung ist der jeweils aktuelle Ist-Wert der tatsächlich in jedem Augenblick vorliegenden Verkehrsbelastung. Ein Vergleich dieses Ist-Wertes mit dem Soll-Wert gibt jeweils einen Hinweis dafür, ob die dem zentralen Steuerwerk zuzuführende Verkehrsbelastung gegenüber dem momentanen Wert erhöht werden kann oder erniedrigt werden muß.

Die Belastbarkeit eines jeden solchen Schaltwerkes hängt grundsätzlich von seinem Aufbau (Struktur und Programmabwicklung) und von der Art und dem Umfang der ihm laufend übertragenen Informationsverarbeitungsvorgänge ab. Außerdem kann sich die Zusammensetzung von Informationsverarbeitungsvorgängen verschiedener Art während des Betriebes eines Schaltwerkes verschieben. So kann es zum Beispiel unter der Voraussetzung, daß das Schaltwerk das Zentralsteuerwerk einer Fernsprechvermittlungsanlage ist, sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. Auch kann es sein, daß zu bestimmten Tageszeiten der Anteil von vorzeitig abgebrochenen Verbindungsherstellungsvorgängen größer ist als zu bestimmten anderen Tageszeiten. Folglich ist die Belastbarkeit eines solchen Steuerwerks nicht konstant.

Um nun ein Schaltwerk optimal auszulasten, ist es zweckmäßig, die zu den verschiedenen Betriebszeiten aufgrund der unterschiedlichen Voraussetzungen gegebenen und voneinander abweichenden Belastbarkeiten zu berücksichtigen. Deshalb ist es gebräuchlich, solche Schaltwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, also Kurzzeitschwankungen nicht zum Tragen kommen zu lassen. Eine solche Meßeinrichtung kann zum Beispiel auf der Basis arbeiten, daß ein jedes Steuerwerk bei jeweiliger Abarbeitung sämtlicher vorliegender Informationsverarbeitungsaufträge ein Anforderungssignal erzeugt, das u.a. dieser Meßeinrichtung zugeführt wird. Diese Meßeinrichtung zählt über bestimmte Zeiträume hinweg, zum Beispiel über eine Sekunde oder 4 Sekunden hinweg die Anzahl solcher aufgetretener Anforderungssignale im betreffenden Steuerwerk.

Im bekannten Falle erfolgt die Belastbarkeitsmessung zur Gewinnung des erwähnten Soll-Wertes also über relativ große Zeitspannen von je mehreren Sekunden, während die Belastungsmessung zur Ermittlung der laufenden Ist-Werte ebenfalls durch Zählung, aber in viel kleineren Zeitintervallen erfolgt, wobei jedes dieser Zeitintervalle nur ein kleiner Bruchteil jeder der Zeitspannen ist. - Übersteigt diese Zahl innerhalb eines Zeitintervalles einen dem Soll-Wert entsprechenden und durch ihn bestimmten Grenzwert, so werden alle weiteren Aufträge bis zum Ende des Zeitintervalles abgewiesen. Dadurch wird die auf ein Schaltwerk treffende und aus auszuführenden einzelnen Aufträgen bestehende Belastung (Rechenoperationen, Steuerungsvorgänge u.dgl.) geregelt. Dabei ist es erforderlich, daß die Dauer jedes der Zeitintervalle auch groß genug ist, damit eine Belastungsregelung nicht in groben Sprüngen, sondern fein genug erfolgt.

Anhand der durch Zählung erfaßten Belastungsergebnisse kann die Zahl der Aufträge und damit der Zustrom von im Rechner zu verarbeitenden Informationen eingeschränkt oder vorübergehend ganz gestoppt werden. Dadurch soll die Verkehrsbelastung optimal an die Belastbarkeit eines Schaltwerkes, zum Beispiel Rechners angepaßt werden, um sowohl eine möglichst hohe Ausnutzung der Verarbeitungskapazität zu erzielen, als auch Überbelastungen soweit wie möglich zu vermeiden, die bekanntlich erhebliche vorübergehende Betriebseinschränkungen oder Betriebsstörungen für die das betreffende Schaltwerk in Anspruch nehmenden Einrichtungen zur Folge haben können. Dies wird in den durch den Vortrag angesprochenen Anwendungsfällen also durch eine dynamische Anpassung der Verkehrsbelastung an die gemäß den nach wechselnder Art und darin nach Häufigkeit der dem Schaltwerk zugeführten Informationsverarbeitungs-Aufträgen ebenfalls wechselnde Belastbarkeit verbessert.

Die zuletzt angesprochene dynamische Anpassung der Verkehrsbelastung an die wechselnde Belastbarkeit ist im Bereich von Vollast und Überlast relativ präzise. Sinkt aber die Verkehrsbelastung eines Schaltwerkes infolge eines Zurückgehens der Anzahl von Informationsverarbeitungsaufträgen pro Zeiteinheit wesentlich unter die Verkehrsbelastbarkeit ab, so liegt es ganz im Wesen der Regelung, daß der für die Zählung pro Zeiteinheit der laufend eintreffenden Informationsverarbeitungsaufträge aus der Belastbarkeitsmessung gewonnene Vergleichswert entsprechend erhöht wird. In Zeiten relativ niedriger Verkehrsbelastung werden also einem entsprechend höheren Angebot an Informationsverarbeitungsaufträgen Tür und Tor geöffnet. Dies ist im Sinne einer guten Ausnutzung der Verarbeitungskapazität unter der Voraussetzung zweckmäßig, daß die Verkehrsbelastung stark schwankt, weil unter dieser Voraussetzung die Schwankungen ausgeglichen werden können und das betreffende Schaltwerk immer gut ausgelastet ist. Handelt es sich aber um längere Zeiten relativ niedriger Verkehrsbelastung, so kann in einer extremen Erhöhung des Vergleichswertes eine Gefahr für ein Schaltwerk liegen, dergestalt, daß es bei plötzlich eintretendem Belastungssprung mit Informationsverarbeitungsaufträgen völlig überschwemmt werden kann, bevor der Vergleichswert in der hierfür an sich erforderlich werdenden Weise entsprechend wieder heruntergeregelt werden kann. Es ist aber für die Belastungsverhältnisse bei manchen Schaltwerken, zum Beispiel Zentralsteuerwerken von Fernsprechvermittlungsanlagen, gerade typisch, daß einem stärkeren Belastungssprung eine längere Phase relativ niedriger Belastung vorausgeht, zum Beispiel bei der Tarifumschaltung von Normaltarif auf Billigtarif.

Um diesem Problem entgegenzuwirken ist in einer in der DE-A-3 328 575 beschriebenen Schaltungsanordnung dafür gesorgt, daß sie im Hinblick auf Zeitabschnitte relativ niedriger Informationsverarbeitungs-Verkehrsbelastung wohl vorbereitet ist auf einen plötzlichen, starken und bleibenden Anstieg dieser Belastung, was dadurch bewirkt wird, daß nach einer erfolgten Abwehr einer Informationsverarbeitungs-Verkehrsüberlastung bei einer Abnahme derselben und einem dabei stattfindenden ununterbrochenen Unterschreiten einer Belastungsdegressionsgrenze durch den Momentanwert nach Ablauf einer bestimmten Mindest-Karenzzeit während der für das für die Belastbarkeit maßgebende Bestimmungsergebnis aufgrund des Rückganges der Belastung stets höhere Werte ermittelt werden, die Erzeugung und/oder Weitergabe und/oder Auswertung des Bestimmungsergebnisses - letztere durch Vergleich des Zählergebnisses mit dem Bestimmungsergebnis - unterbrochen wird, und daß das zuletzt ermittelte und in der Zähleinrichtung gespeicherte Bestimmungsergebnis durch einen konstanten Mittelwert ersetzt wird, und daß die Erzeugung und/oder Weitergabe und/oder Auswertung des Bestimmungsergebnisses erneut wirksam geschaltet wird, wenn der Momentanwert wieder eine Abwehr von Überlastungen einleitet bzw. vorbereitet. Der zuvor genannte konstante Mittelwert ist ein rechnerisch ermittelter und einmalig festgelegter Normalwert.

Die Erfindung bezieht sich auf eine ähnliche Schaltungsanordnung, und zwar auf eine Schaltungsanordnung für Fernmeldeanlagen, insbesondere Fernsprechvermittlungsanlagen, in denen zentrale und/oder teilzentrale informationsverarbeitende Schaltwerke mit einer hinsichtlich der Informations-Verarbeitungskapazität begrenzten Leistungsfähigkeit, sowie Meßeinrichtungen zur Bestimmung der Belastbarkeit solcher Schaltwerke vorgesehen sind, die die stets schwankende Belastung über Zeiträume integrieren, die jeweils groß genug sind, um ein Bestimmungsergebnis mit ausreichender Ergebnisgenauigkeit zu gewährleisten, und in denen eine einer Ermittlung der Informationsverarbeitungs-Verkehrsbelastung jeweils eines Schaltwerkes und einer Erkennung und Abwehr von Informationsverarbeitungs-Verkehrsüberlastungen dienende Zähleinrichtung mit möglichst geringem Zeitverzug einen aktuellen und durch Vergleich jeweils eines periodisch wiederholt gewonnenen Zählergebnisses mit dem von ihr empfangenen und in ihr gespeicherten Bestimmungsergebnis sich ergebenden Momentanwert der Informations-Verkehrsbelastung liefert, um bei einem Anwachsen der laufenden Zählergebnisse über das Bestimmungsergebnis solche Überlastungen verzögerungsarm durch Abweisung von Informationsverarbeitungsaufträgen abzuwehren, und in denen nach Abwehr einer Informationsverarbeitungs-Verkehrsüberlastung und nach einem Absinken der periodisch gewonnenen Zählergebnisse und einem während einer bestimmten Mindest-Karenzzeit ununterbrochenen Verbleiben derselben unter dem Bestimmungsergebnis, während der für das für die Belastbarkeit maßgebende Bestimmungsergebnis aufgrund des Rückganges der Belastung zunehmend höhere Werte ermittelt werden, die Erzeugung und/oder Weitergabe und/oder Auswertung des Bestimmungsergebnisses - letztere durch laufenden Vergleich der periodisch wiederholt gewonnenen Zählergebnisse mit dem Bestimmungsergebnis - unterbrochen wird, und in denen das zuletzt ermittelte und in der Zähleinrichtung gespeicherte Bestimmungsergebnis durch einen nach dem Abwehrvorgang unverändert bleibenden niedrigeren Normalwert ersetzt wird bis aufgrund eines Staus an Informationsverarbeitungsaufträgen oder eines Anwachsens der laufenden Zählergebnisse über einen wesentlich oberhalb des Normalwertes liegenden Vergleichswert die Erzeugung und/oder Weitergabe und/oder Auswertung des Bestimmungsergebnisses erneut wirksam geschaltet wird.

Wie bereits erwähnt wurde, handelt es sich in der genannten Offenlegungsschrift bei dem konstanten Mittelwert um einen Normalwert, der auf der Grundlage verkehrstheoretischer Basis rechnerisch ermittelt ist und einmalig festgelegt wird. Es kann nun sein, daß die hinsichtlich der für die verkehrstheoretischen Berechnungen angenommenen und durch Verkehrssimulationen ermittelten Voraussetzungen die praktischen Betriebsverhältnisse erheblich von den ursprünglichen Gegebenheiten abweichen, was durchaus auch darauf zurückzuführen ist, daß sich die Gesamtheit der Betriebsumstände im Laufe der Zeit allmählich aber bleibend verändern können.

Wenn der die Belastbarkeit betreffende konstante Mittelwert gegenüber der betrieblichen Realität zu stark abweicht, können sich für die Initialisierung der Regelung des in dem Zähler gespeicherten und für eine Abweisung von Belegungen maßgebenden Vergleichswertes sehr unvorteilhafte Voraussetzungen ergeben. Liegt der konstante Mittelwert zu hoch, so bewirkt der durch diesen gegebene, im Zähler gespeicherte Vergleichswert, daß die Abwehr einer auftretenden Überlast relativ zu spät einsetzt. Liegt dieser Mittelwert dagegen zu niedrig, so kann es sich ergeben, daß diese Abwehr bereits zur Abweisung von eingehenden Belegungen führt, wenn eine Überlastsituation überhaupt noch nicht eingetreten ist.

Für die Erfindung besteht die Aufgabe, in einer Schaltungsanordnung der zuletzt beschriebenen Art dafür zu sorgen, daß beim Entstehen der Überlastsituation Abweisungsmaßnahmen rechtzeitig einsetzen, daß jedoch von der Verkehrsleistung eines Schaltwerkes besonders dann nichts unausgenutzt bleibt, wenn die diesbezüglichen Anforderungen groß sind.

Die Erfindung löst diese Aufgabe dadurch, daß beim Absinken der periodisch gewonnenen Zählergebnisse ein zur Zeit des Erreichens oder der Unterschreitung des Bestimmungsergebnisses gegebener Wert gespeichert wird, und daß nach Ablauf der Mindest-Karenzzeit, während der die periodisch gewonnenen Zählergebnisse unterhalb des Bestimmungsergebnisses verbleiben, dieser gespeicherte Wert direkt oder ein Mittelwert aus einer Mehrzahl solcher gespeicherter Werte als Normalwert dient, und daß bis zur Gewinnung eines neuen Bestimmungsergebnisses die periodisch gewonnenen Zählergebnisse auf der Basis dieses Normalwertes zur Ermittlung der laufenden Momemtanwerte der Informations-Verkehrsbelastung dienen.

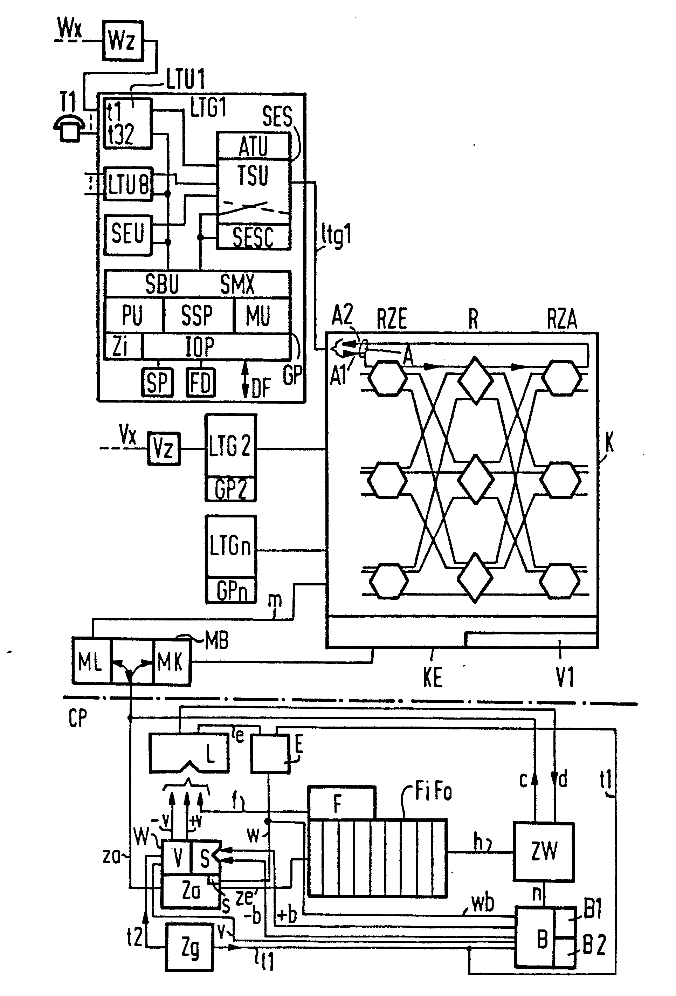

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-

Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, zum Beispiel A des Koppelfeldteiles K, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/1980, Heft 10, Seiten 646 bis 652, und 1978 International Zurich Seminar on Digital Communications, Proceedings IEE Catalogue, Nr. 78 CH 1325-0 ASST, Seiten B2-1, A4.1, auch die deutschen Patentanmeldungen P-3 100 811.9 / VPA 81 P 6201; P-3 104 002.0 / VPA 81 P 6203 und P-3 106 903.7 / VPA 81 P 6209).

In der Zeichnung ist unter anderem die Anschlußgruppe LTG1 gezeigt. Deren Aufbau und Arbeitsweise sind ausführlich in der DE-A-2 826 113 ab Seite 6 unten beschrieben. Ferner sei auf das Beiheft zum 4. Jahrgang (1981) der Zeitschrift "telcom report" hingewiesen. Die weiteren Erläuterungen setzen diese Beschreibung als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluß vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist zum Beispiel in der DE-B-1 537 849 (VPA 67/3047) ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-A-2 826 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, zum Beispiel der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlußgruppen LTG1 bis LTGn mit Hilfe des Koppelfeldes K durchgeschaltet sein müssen, bevor der Aufbau von Nachrichtenverbindungen, zum Beispiel Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V Einstelldaten, d.h. also die Vermittlungsdaten, für die Datenkanäle gespeichert enthält. Diese Vermittlungsdaten brauchen also bei einem Neuaufbau der Datenverbindung nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlußgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Wie in der bereits genannten DE-A-2 826 113 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, zum Beispiel LTG1, zugeordneten dezentralen Steuereinrichtungen, zum Beispiel GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten deutschen Offenlegungsschrift 2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze, Gebührenzählimpulsgeber (ZIG) u.dgl. sind teilnehmerindividuelle und/oder verbindungsindividuelle Schalteinrichtungen.

Das Gruppensteuerwerk nun dient in an sich bekannter Weise zur Abwicklung der Aufnahme der zuvor erwähnten eintreffenden verbindungsindividuellen Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speicher SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld K hin als auch von diesem abgehend zu einer solchen Leitung durchgeschaltet. Bei einer Verbindungsherstellung erfolgt zunächst eine Durchschaltung zum Beispiel von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlußgruppe (gegebenenfalls dieselbe Anschlußgruppe, in der Regel aber eine andere Anschlußgruppe), wozu das betreffende Gruppensteuerwerk der jeweiligen Anschlußgruppe tätig werden muß, bzw. die betreffenden Gruppensteuerwerke der jeweiligen Anschlußgruppen tätig werden müssen.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits.

Die im Zusammenhang dieser jeweils pro Verbindung erforderlichen Durchschaltvorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Inanspruchnahme des Gruppensteuerwerks zwangsläufig verbundene Informationsverarbeitungs-Verkehrsbelastung pro Durchschaltevorgang - wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben. Die pro Verbindungsherstellung von einem Gruppensteuerwerk an das zentrale Steuerwerk zu übertragenden Informationen sind im wesentlichen Einstell- und Steuerinformationen.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe zum Beispiel der Schleifenschluß, der das Anrufsignal darstellt. Ein solches Initial-Schaltkennzeichen ist bei einer Verbindungsleitung zum Beispiel das c-Ader-Belegungssignal bei ankommender Belegung. Entsprechendes gilt für verbindungsindividuelle Kanäle.

Die genannten Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Das bereits erwähnte Zentralsteuerwerk ZW ist ein zentrales informationsverarbeitendes Schaltwerk. Die dezentralen Steuereinrichtungen GP1 bis Gpn sind teilzentrale informationsverarbeitende Schaltwerke. Wie bereits erläutert wurde, findet der Datenaustausch zwischen den teilzentralen Schaltwerken GP1 bis GPn einerseits und dem zentralen Schaltwerk ZW andererseits über die Pufferspeicher MB statt. Informationen, die zum zentralen Schaltwerk hin zu übertragen sind, werden über die Leitungen za, ze und h weitergegeben. Informationen, die vom zentralen Schaltwerk ZW zu den teilzentralen Schaltwerken GP1 bis Gpn abgegeben werden, werden über den Weg c übertragen.

Wie bereits erwähnt wurde, und wie ganz allgemein bekannt, weist das zentrale Schaltwerk hinsichtlich seiner Informations-Verarbeitungskapazität eine begrenzte Leistungsfähigkeit auf. Diese Leistungsfähigkeit betrifft die Anzahl von Informationsverarbeitungsvorgängen, die pro Zeiteinheit abgewickelt werden können. Die Belastbarkeit eines jeden zentralen Schaltwerkes hängt grundsätzlich von seinem Aufbau (Struktur und Programmabwicklung) und von der Art und dem Umfang der ihm laufend übertragenen Informationsverarbeitungsvorgänge ab. Diese sind in der Regel von unterschiedlicher Art. Sie treten gemischt auf; die Belastbarkeit betrifft deshalb die jeweils gegebene Mischung von Informationsverarbeitungsaufträgen.

Die Erfahrung lehrt nun, daß die Zusammensetzung von Informationsverarbeitungsvorgängen verschiedener Art sich während des Betriebes eines zentralen Schaltwerkes verschieben kann. So kann es zum Beispiel sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeitan mehr Sonderdienste in Anspruch genommen werden als zu anderen Tageszeiten. Darüber hinaus kann der Anteil von jeweils vor vollständiger Verbindungsherstellung abgebrochenen Verbindungsherstellungsversuchen an der Gesamtheit der Verbindungsherstellungsvorgänge zu bestimmten Tageszeiten größer sein als zu bestimmten anderen Tageszeiten.

Aus den verschiedenen zuvor angegebenen Gründen ist die Belastbarkeit eines zentralen Schaltwerks nicht konstant. Um ein zentrales Schaltwerk optimal auszulasten, ist es deshalb zweckmäßig, die zu den verschiedenen Betriebszeiten aufgrund der unterschiedlichen Voraussetzungen gegebenen unterschiedlichen Belastbarkeiten zu berücksichtigen. Deshalb ist es gebräuchlich, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, wobei also Kurzzeitschwankungen nicht zum Tragen kommen.

Eine dem zuvor angegebenen Zweck dienende Meßeinrichtung kann z. B. auf der Basis arbeiten, daß ein zentrales Steuerwerk nach jeweils erfolgter Abarbeitung sämtlicher vorliegender Informationsverarbeitungsaufträge ein Anforderungssignal erzeugt, das u.a. dieser Meßeinrichtung zugeführt wird. Diese Meßeinrichtung zählt nun über bestimmte Zeiträume gleicher Größe hinweg, zum Beispiel über vier Sekunden hinweg, die Anzahl solcher aufgetretener Anforderungssignale im zentralen Schaltwerk. In der Zeichnung ist eine dem zentralen Schaltwerk ZW zugeordnete und mit ihm über eine Leitung n verbundene Meßeinrichtung B dargestellt. Vom zentralen Schaltwerk erhält sie also über diese Leitung n das Anforderungssignal bei seinem jedesmaligen Auftreten. Die Meßeinrichtung B zählt in an sich bekannter Weise die Anforderungssignale ab. Von einer zentralen Zeitgebereinrichtung Zg erhält sie im Abstand von 4 Sekunden ein Zeitmarkierungssignal über die Leitung t1. Dieses Zeitmarkierungssignal bedeutet für einen Meßzeitraum das Ende und zugleich den Beginn für den jeweils nächstfolgenden Meßzeitraum. Die Meßeinrichtung B ermittelt nun die Anzahl der zwischen zwei solchen Zeitmarkierungen eintreffenden Anforderungssignale des jeweiligen zentralen Schaltwerks. Liegen längere Zeit keine Informationsverarbeitungsaufträge vor, so werden diese Anforderingssignale in Zeitabständen abgegeben, die jeweils einem Informationsverarbeitungsvorgang im Mittel entsprechen. Es ist auch möglich, anstelle von oder zusätzlich zu diesen Anforderungssignalen drittrangige Informationsverarbeitungsvorgänge vom zentralen Schaltwerk ZW zur Meßeinrichtung B hin zu melden, also diese drittrangigen Informationsverarbeitungsvorgänge einer Ermittlung der Belastbarkeit zugrunde zu legen. Solche drittrangigen Informationsverarbeitungsvorgänge können zum Beispiel interne Prüfroutine-Programmabläufe oder dergleichen sein.

Die Meßeinrichtung B zählt also jeweils innerhalb eines Meßzeitraumes die erhaltenen Anforderungssignale und bildet hieraus einen Belastbarkeitsmeßwert. Außer diesem gibt es einen die Belastbarkeit betreffenden Konstantwert. Dieser ist vor erstmaliger Inbetriebnahme einer Fernmeldevermittlungsanlage der hier beschrieben Art rechnerisch aus bekannten Ausgangswerten ermittelt und ist im Speicher B2 der Meßeinrichtung B gespeichert. Er gibt die Anzahl von Anforderungssignalen an, die - langfristig gesehen - von einem zentralen Schaltwerk der hier gegebenen Art bei normaler Belastung abgegeben werden. Dieser Konstantwert ist bei Inbetriebnahme der Vermittlungsanlage außer dem in einem Speicher B1 gespeichert. Die Meßeinrichtung B subtrahiert nun von dem im Speicher B1 gespeicherten Wert die Anzahl der jeweils pro Meßzeitraum erhaltenen Anforderungssignale und dividiert die sich hierbei ergebende Differenz wiederum durch den im Speicher B1 gespeicherten Wert. Ergibt sich hierbei der Wert 1, so ist hieran erkennbar, daß das zentrale Schaltwerk ZW in dem jeweiligen Meßzeitraum pausenlos mit Informationsverarbeitungsvorgängen beschäftigt war. Darin liegt ein Indiz dafür, daß das zentrale Schaltwerk in dem betreffenden Meßzeitraum zu hoch belastet war. Das zentrale Schaltwerk soll im allgemeinen nur zu 95 % ausgelastet sein. Ergibt der erwähnte Divisionsvorgang den Wert von 0, so ergibt sich daraus, daß das zentrale Schaltwerk in der erwünschten Weise zu 95 % ausgelastet war. Ergibt sich jedoch ein negativer Wert, zum Beispiel von -0,02, so ist hieran erkennbar, daß das zentrale Schaltwerk nur zu 93 % in dem betreffenden Meßzeitraum ausgelastet war, also zu niedrig.

Je nach dem erhaltenen Ergebnis aus dem betreffenden Divisionsvorgang pro Meßzeitraum gibt die Meßeinrichtung B entweder überhaupt kein Signal zu einem Belastungszähler W hin ab, oder sie gibt bei zu niedriger - bzw. zu hoher - Belastung des zentralen Schaltwerkes (wenn also die Soll-Belastbarkeit von 95 % höher - bzw. niedriger - als die zur Zeit tatsächlich vorliegende Belastung des zentralen Schaltwerks ist), ein Steigerungssignal über den Weg +b - bzw. ein Minderungssignal über den Weg -b.

Wie zuvor ausgeführt wurde, wird das Steigerungssignal - bzw. das Minderungssignal - von der Meßeinrichtung B dem Belastungszähler W zugeführt. In ihm ist ein weiter unten erklärter Vergleichswert gespeichert. Dieser wird bei Erhalt des Steigerungssignales - bzw. des Minderungssignales - erhöht - bzw. erniedrigt. Diese Signale, d.h. jeweils das eine oder das andere, werden von der Meßeinrichtung B dem Belastungszähler W zugeführt. Diesen Belastungszähler durchlaufen sämtliche Informationsverarbeitungsaufträge, die über die Leitung za eintreffen und über die Leitung ze weitergegeben werden. Bei diesen Informationsverarbeitungsaufträgen handelt es sich teilweise um Initialaufträge und teilweise um Nachfolgeaufträge. Die zur Herstellung einer Verbindung von einem rufenden Teilnehmer abgegebenen Schaltkennzeichen bestehen aus einem Initial-Schaltkennzeichen an erster Stelle (Anrufsignal) und aus Nachfolge-Schaltkennzeichen, die in Zeitabständen, die durch die Art und Weise des jeweils rufenden Teilnehmers bedingt sind, eintreffen. Im Zusammenhang mit jeweils einer Verbindungsherstellung gehören also immer ein Initial-Schaltkennzeichen und eine Anzahl von Nachfolge-Schaltkennzeichen zusammen. Nachfolge-Schaltkennzeichen können darüber hinaus jeweils im Zusammenhang mit einer Verbindungsherstellung das Wahlendekennzeichen, das Meldekennzeichen, das Endekennzeichen und dergleichen sein, also Leitungskennzeichen, sowie Gebührenzählimpulse. Diese Schaltkennzeichen werden mit Hilfe eines dezentralen Schaltwerks (teilzentrales Schaltwerk) GP aufgenommen; aus ihnen ergeben sich Informationsverarbeitungsaufträge, die gemäß der Unterscheidung der Schaltkennzeichen in Initial-Schaltkennzeichen und Nachfolge-Schaltkennzeichen ebenfalls zu unterscheiden sind, und zwar in Initialaufträge und Nachfolgeaufträge.

Über die Leitung za treffen nun sukzessive nacheinander Informationsverarbeitungsaufträge ein. Diese bestehen zu einem kleineren Teil aus Initialaufträgen und zu einem größeren Teil aus Nachfolgeaufträgen. Diese Informationsverarbeitungsaufträge treffen bezüglich der verschiedenen Verbindungsherstellungsvorgänge ungeordnet, d.h. also gemischt ein. Sie durchlaufen den Belastungszähler W und werden in einem FiFo-Speicher gespeichert. Dieser FiFo-Speicher weist in bekannter Weise eine größere Anzahl von Speichereinheiten auf, wobei jeweils eine Speichereinheit zur Speicherung eines Informationsverarbeitungsauftrages dient. In der gleichen Reihenfolge, wie die Informationsverarbeitungsaufträge über die Leitung ze zum FiFo-Speicher gegeben werden, werden sie auf Abruf durch das zentrale Schaltwerk ZW über die Leitung h vom FiFo-Speicher zu diesen zentralen Schaltwerk weitergegeben.

Der Belastungszähler W dient nun als eine weitere Meßeinrichtung zur Bestimmung eines Abweichens der akuten Informationsverarbeitungs-Arbeitsbelastung des zentralen Schaltwerks von seiner Leistungsfähigkeit. Der Belastungszähler W, der von sämtlichen Informationsverarbeitungsaufträgen durchlaufen wird, zählt von diesen lediglich die Initialaufträge.

Für die zuletzt erwähnte Zählung bestehen zwei Möglichkeiten. Die eine Möglichkeit besteht darin, daß eine zum Beispiel jede Sekunde über die Leitung t2 zum Belastungszähler übertragene Zeitmarkierung in dem Belastungszähler W jeweils einen Zählvorgang startet bzw. stoppt, und daß ein zwischen je zwei Zeitmarkierungen gewonnenes Zählergebnis mit dem Vergleichswert verglichen wird. Die andere Möglichkeit besteht darin, daß ein Zähler durch die Initialaufträge vorwärtsgeschaltet wird und in gleichmäßigen Zeitabständen unabhängig von den Initialaufträgen rückwärtsgeschaltet wird, und daß der Vergleichswert eine Anzahl von Rückwärtsschaltvorgängen bewirkt, die jeweils zwischen zwei in gleicher Weise wie in den zuvor angegebenen Zeitmarkierungen ausgeführt werden.

Es ist also für Initialaufträge (Initial-Schaltkennzeichen) und Nachfolgeaufträge (Nachfolge-Schaltkennzeichen) ein gemeinsamer FiFo-Speicher vorgesehen; der Belastungszähler W selektiert von den dem FiFo-Speicher zugeführten Informationsverarbeitungsaufträgen (Schaltkennzeichen) die Initialaufträge, um den Zählvorgang nur auf diese zu beschränken. Wie ausgeführt, führt der Belastungszähler W die Zählung in aufeinanderfolgenden Zählzeitintervallen durch, die durch die genannten Zeitmarkierungen begrenzt sind; er wird jeweils nach Ablauf eines Zählzeitintervalles durch die Zeitmarkierung in seine Ausgangsposition zurückgestellt und liefert ein am Ende eines jeden Zählzeitintervalles mit einem Vergleichswert zu vergleichendes Zählergebnis. Dieser Vergleichswert stellt einen Schwellenwert dar. Die andere Möglichkeit besteht darin, daß der Belastungszähler W durch die Initialaufträge vorvärtsgeschaltet und kontinuierlich schrittweise zurückgestellt wird. In diesem Falle hält der Belastungszähler also jederzeit ein Zählergebnis bereit, das einem andauernden, wenigstens aber einmal pro Vorwärtszählvorgang und/oder pro Rückstellvorgang anhand eines Schwellenwertes durchgeführten Vergleichsvorgang unterworfen wird. - In beiden Fällen der speziellen Ausbildung des Belastungszählers W wird aufgrund einer Überschreitung des Schwellenwertes die Zufuhr von Initialaufträgen (Initial-Schaltkennzeichen) zum FiFo-Speicher gedrosselt, wodurch eine Annahme aller auch jeweils zu einem Initialauftrag (Initial-Schaltkennzeichen) gehörenden Nachfolgeaufträge (Nachfolge-Schaltkennzeichen) verhindert ist. Um dies nun zu bewerkstelligen, ist eine Restriktionseinrichtung L vorgesehen. Überschreitet in dem Belastungszähler W der Zählwert den Schwellenwert, also den Vergleichswert, so gibt der Belastungszähler W ein Minderungssignal über die Leitung -v zur Restriktionseinrichtung L. Ist die Überschreitung des Schwellenwertes durch den Zählwert wieder behoben, so gibt der Belastungszähler W ein Steigerungssignal +v zur Restriktionseinrichtung L hin ab. Die Abgabe eines Minderungssignales oder Steigerungssignales vom Belastungszähler W zur Restriktionseinrichtung L erfolgt in gleichmäßigen Zeitabständen von zum Beispiel 1 Sekunde.

Die Restriktionseinrichtung L dient nun dazu, in den Anschlußgruppen LTG1 bis LTGn zu bewirken, daß hier ein bestimmter Prozentsatz von Verbindungsherstellungsversuchen abgewiesen wird. Dadurch soll die Menge der einfallenden Informationsverarbeitungsaufträge reduziert werden. Hierzu ist in jedem der dezentralen Schaltwerke GP ein Speicher Zi vorgesehen, in dem der Prozentsatz von Anrufsignalen gespeichert ist, die bei einer Erkennung von Informationsverarbeitungs-Verkehrsüberlastungen zur Abwehr solcher Überlastungen abgewiesen werden sollen. In diesem Speicher sind zum Beispiel die Prozentsätze 0 %, 25 %, 33,3 %, 50 % und 75 % speicherbar. Diese Prozentsätze geben an, welcher Anteil der eintreffenden Anrufsignale abzuweisen ist. Unter Abweisung ist zu verstehen, daß bei Eintreffen eines Anrufsignales an den betreffenden Teilnehmer Besetztsignal ausgesendet wird, und daß verhindert wird, daß von ihm abgegebene Wahlkennzeichen aufgenommen, bzw. in Form von Nachfolgeschaltkennzeichen weitergeleitet werden. Ebensogut ist es auch möglich, anstelle eines Prozentsatzes für abzuweisende Anrufsignale auch einen Prozentsatz für anzunehmende Anrufsignale, also eine "Durchlaßquote" zu speichern. - Die Abweisung von Anrufsignalen mittels einer Abweiseinrichtung kann nach dem Abzählprinzip erfolgen, wobei also ein jeweils rufender Teilnehmer zufällig Erfolg oder Mißerfolg haben kann mit seinem Verbindungsherstellungsversuch, oder es kann auch unterschieden werden zwischen Anrufen oder Teilnehmern verschiedener Prioritätsklassen.

Daten über den jeweiligen Prozentsatz von abzuweisenden bzw. durchzulassenden Initialaufträgen werden von der Restriktionseinrichtung L zu den dezentralen Schaltwerken GP übertragen und in ihnen gespeichert. Eine solche Übertragung dieser Daten findet entweder laufend statt oder immer nur dann, wenn eine Erhöhung oder Herabsetzung dieses Prozentsatzes zu melden ist. Die in den dezentralen Schaltwerken durch die Speicherung des Prozentsatzes vorgesehenen Speicherschaltmittel Zi verringern bzw. vergrößern den gespeicherten Prozentsatz immer bei Eintreffen von eine Erhöhung bzw. eine Herabsetzung meldenden Daten schrittweise.

Es ist nun vorgesehen, daß die der Meldung der Erhöhung bzw. Herabsetzung des Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln Zi übertragen werden. Hierzu ist die Restriktionseinrichtung L mit dem zentralen Schaltwerk über die Leitung d verbunden. Sie meldet über diesen Weg Daten bezüglich des geltenden Prozentsatzes. Das zentrale Schaltwerk ZW gibt diese Daten, die jeweils Daten relativ geringen Informationsinhaltes sind, den der Abwicklung der Vermittlungsvorgänge dienenden Einstell- und Steuerinformationen bei, die also vom zentralen Schaltwerk zu den dezentralen Schaltwerken laufend übertragen werden. Es ist also nicht erforderlich, daß für die Übertragung der den jeweiligen Prozentsatz betreffenden Daten eigene Nachrichten-Transaktionen gestartet werden müssen, sondern diese Daten werden den Einstell- und Steuerinformationen für die Verbindungsherstellung beigegeben. Da der Datenaustausch mit den verschiedenen Anschlußgruppen unterschiedlich intensiv ist, werden die den jeweiligen Prozentsatz meldenden Daten also besonders schnell zu denjenigen dezentralen Schaltwerken hin transportiert, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase gleich starker Lastabwehr nicht erforderlich, Daten hierüber vom zentralen Steuerwerk zu den dezentralen Steuerwerken zu übertragen, die die Informationsverarbeitungs-Verkehrsüberlastung betreffen. Treten Informationsverarbeitungs-Verkehrsüberlastungen von einer Anschlußgruppe her auf, so werden die betreffenden Restriktionsdaten zuerst zu dieser hin gemeldet.

Die Informationsverarbeitungsaufträge (Schaltkennzeichen) treffen in ihrer jeweiligen zeitlichen Folge also gemischt hinsichtlich verschiedener Serien (eine Serie entspricht immer einem Verbindungsherstellungsvorgang) aufeinanderfolgend ein; sie zeigen ihre jeweilige Serienzugehörigkeit durch eine jedem Schaltkennzeichen beigegebene Ursprungsadresse an. Diese Ursprungsadresse gibt die jeweilige Zuordnung zu der Teilnehmeranschlußschaltung eines rufenden Teilnehmers oder einem Verbindungssatz oder einer Leitungsabschlußschaltung oder dergleichen, also zu einer der genannten verbindungsindividuellen Schalteinrichtungen an.

Es ist vorgesehen, daß nach einer erfolgten Abwehr einer Informationsverarbeitungs-Verkehrsüberlastung bei einer Abnahme eines entsprechenden Staus an Informationsverarbeitungs-Anforderungen und nach einem Rückgang des von der Restriktionseinrichtung L an das Schaltwerk ZW (zur oben beschriebenen Verteilung an die dezentralen Schaltwerke GP) abgegebenen Abweisungs-Prozentsatzes auf den Wert Null und nach Ablauf einer festgelegten, vom Zeitpunkt dieser Rücksetzung gemessenen Mindest-Karenzzeit von zum Beispiel 12 Sekunden, während der also für den für die Belastbarkeit maßgebenden Belastbarkeitsmeßwert aufgrund des Rückganges der tatsächlichen Belastung stets höhere Werte ermittelt werden, die Regelung des im Speicher S des Zählers W gespeicherten Vergleichswertes vorläufig beendet wird. Diese Regelung erfolgte anhand des von der Meßeinrichtung B gewonnenen Belastbarkeitsmeßergebnisses und anhand des daraus gebildeten Divisionsergebnisses. - Zur Abmessung der zuvor erwähnten Mindest-Karenzzeit ist eine Indikationseinrichtung E vorgesehen. Diese ist über eine Leitung e mit dem Ausgang der Restriktionseinrichtung L verbunden. Über diese Leitung e empfängt die Indikationseinrichtung E den jeweils von der Restriktionseinrichtung L ermittelten Abweisungsprozentsatz. Ferner ist die Indikationseinrichtung E über die Leitung t1 mit der Zeitgebereinrichtung Zg verbunden. Wenn ununterbrochen eine längere Zeit, zum Beispiel von 12 Sekunden, keine Informationsverarbeitungs-Verkehrsüberlastung vorgelegen hat, also der Abweisungs-Prozentsatz auch so lange ununterbrochen den Wert Null gehabt hat, wird die Belastbarkeitsmessung deaktiviert. Hierzu überwacht die Indikationseinrichtung E also jeweils beginnend vom Zeitpunkt der Rücksetzung des Abweisungs-Prozentsatzes in der Restriktionseinrichtung L auf den Wert Null während der von diesem Zeitpunkt an gemessenen Mindest-Karenzzeit, daß dieser Prozentsatz auf dem Wert Null verbleibt. Wird diese Bedingung erfüllt, so gibt die Indikationseinrichtung E über den Signalweg w ein entsprechendes Signal zum Zähler W hin ab.

Ebenfalls zu Beginn der Mindest-Karenzzeit, also jedesmal dann, wenn der von der Restriktionseinrichtung L angegebene Abweisungsprozentsatz den Wert Null erreicht, gibt die Indikationseinrichtung E ein Signal über den Signalweg w zum Zähler W hin weiter, das den Beginn einer potentiellen Mindest-Karenzzeit kennzeichnet. Dieses Signal bewirkt im Zähler W, daß der momentan im Speicher S gespeicherte Vergleichwert in einen Zusatzspeicher s übertragen und hier gespeichert wird. Ein in ihm ggfs. bereits früher gespeicherter Vergleichwert wird dabei zugleich gelöscht. Erhält danach der Zähler W mit Ablauf der Mindest-Karenzzeit auch das hierfür vorgesehene, oben bereits erwähnte Signal über den Signalweg w, so bewirkt dies, daß der in seinem Zusatzspeicher s gespeicherte Vergleichswert in seinen Speicher S übertragen wird, u.zw. bei gleichzeitiger Löschung des im Speicher S während der Dauer der Mindest-Karenzzeit infolge der beschriebenen Regelungsvorgänge erreichten Vergleichswertes. Wänrend dieser Mindest-Karenzzeit ist ja definitionsgemäß der Abweisungsprozentsatz ununterbrochen gleich Null. Abweisungen waren also während dieser Zeit nicht erforderlich. In der Regel ist dies durch einen entsprechenden Belastungs-Rückgang verursacht. Dieser nun hat während der Mindest-Karenzzeit dafür gesorgt, daß der Vergleichswert des Zählers W, gespeichert in seinem Speicher S, laufend mit positiver Tendenz nachgeregelt wurde, also allmählich einen relativ hohen Wert angenommen hat. Praktisch bedeutet dies, daß bei einem Wiederanwachsen des Zustromes von Informations-Verarbeitungsaufträgen, bzw. von Initialschaltkennzeichen, zunächst eine relativ hohe Anzahl von diesen angenommen werden würde, also zunächst noch keine Abweisungen stattfinden würden, und zwar so lange, bis schließlich von der Meßeinrichtung B her die durch die Belastbarkeitsmessung gesteuerte Regelung des Vergleichswertes diesen so weit wieder herabsetzen würde, daß anhand von entsprechend wieder niedriger werdenden Vergleichswerten der Abweisungsprozentsatz wieder definitive Werte annimmt, also von den Wert Null aus ansteigt. Dies aber würde zu einer vorübergehenden Überbelastung des Zentralsteuerwerkes führen. Um diesen Effekt zu vermeiden, ist in der angedeuteten Weise vorgesehen, daß ein bei Absinken des Abweisungsprozentsatzes auf den Wert Null gegebener Vergleichswert im Speicher S des Zählers W in seinen Zusatzspeicher s übertragen wird, damit er nach Ablauf der Mindest-Karenzzeit aus dem Zusatzspeicher s in den Speicher S wieder zurückübertragen wird.

Nach einer Deaktivierung der Vergleichswert-Regelung arbeitet der Zähler W mit einem Initialisierungs-Vergleichswert, der höher ist als der gespeicherte Vergleichswert im Speicher S. Eine erneute Initialisierung der Vergleichswert-Regelung und der Bildung von Abweisungsprozentsatz-Daten kann durch zweierlei Ursachen herbeigeführt werden. Erreicht der Belastungs-Zähler W, der die Initialschaltkennzeichen zählt, erneut einen wieder höheren Wert, und zwar einen Zählwert, der gleich oder höher ist als ein im Speicher S ebenfalls gespeicherter Initialisierungswert, der größer ist als der überhaupt größtmögliche gespeicherte Vergleichswert, oder erreicht oder überschreitet der Füllungsgrad des sowohl Initialaufträge als auch Nachfolgeaufträge speichernden FiFo-Speichers einen bestimmten Grenzwert, so wird erneut die Auswertung des von der Meßeinrichtung B gelieferten Bestimmungsergebnisses gestartet. Der Zeitraum zwischen Initialisierung und Deaktivierung stellt eine Lastregulierphase dar; in ihr befindet sich die aktuelle Informationsverarbeitungs-Arbeitsbelastung in einem den Vollast- und Überlastbereich umfassenden Lastregulierbereich.

Es ist also vorgesehen, daß der im Speicher S gespeicherte Initialisierungswert so hoch festgelegt ist, daß die Initialisierung nur stattfindet, wenn bei einer nur kurzzeitigen Überlast diese die Belastbarkeit ganz wesentlich übersteigt. In diesem Fall erfolgt die Initialisierung sehr kurzfristig. Übersteigt die erneut eintretende Überlast die Belastbarkeitsgrenze dagegen nur wenig, so dauert es länger, bis die Initialisierung einsetzt. Hierfür ist der in der Meßeinrichtung F des FiFo-Speichers FiFo gespeicherte Festwert vorgesehen. Wenn bei relativ geringer aber länger andauernder Überlast sich dieser Speicher stetig füllt, erfolgt die Initialisierung dadurch. Die Verzugszeit ist hierbei näherungsweise umgekehrt proportional dem Ausmaß der Überlastung und größer als die Reaktionszeit des Zählers W auf plötzlich eintretende starke Überlast. Der im Speicher S gespeicherte Initialisierungswert und der in der Meßeinrichtung F des FiFo-Speichers gespeicherte Festwert ergänzen also einander in ihrer Wirkung, und zwar in der Weise, daß der im Speicher S gespeicherte Wert für ein möglichst rasches Erkennen von hoher Überlastung und der in der Meßeinrichtung F gespeicherte Wert für ein sicheres Erkennen auch von geringer Überlastung Sorge trägt.

Die Meßeinrichtung B liefert also ein die Belastbarkeit des zentralen Steuerwerkes betreffendes Bestimmungsergebnis, das die aus den weiter oben erläuterten Gründen stets etwas schwankende Belastbarkeit erfaßt und deren Werte über Zeiträume integriert, die jeweils groß genug sind, um dieses Bestimmungsergebnis mit ausreichender Ergebnisgenauigkeit zu gewährleisten. Dieses Bestimmungsergebnis findet in dem im Speicher B1 stets neu gespeicherten Belastbarkeitsmeßwert Ausdruck, ferner in den zum Zähler W hin übertragenen Steigerungs- und Minderungssignalen und in dem dadurch im Zähler W laufend regulierten Vergleichswert.

Wie weiterhin ausgeführt wurde, wird am Ende einer Lastregulierphase, also wenn die vom Zähler W periodisch gewonnenen Zählergebnisse laufend, also von Zählergebnis zu Zählergebnis, kleiner werden, ein dabei im Moment des Erreichens oder Unterschreitens das derzeit im Speicher S gespeicherten Vergleichswertes vorhandener Wert, der also zugleich dem Vergleichswert und dem neuesten Zählwert entspricht, bei Beginn einer Mindest-Karenzzeit im Zusatzspeichers gespeichert und bei Ablauf derselben aus diesem in den Speicher S übertragen. Dieser Wert bleibt nach Beendigung einer Lastregulierphase bis zum Beginn der durch eine Initialisierung eingeleiteten nächsten Lastregulierphase im Zähler W gespeichert. Dieser Wert dient als Normalwert, also als ein Anfangswert für den Zähler W beim Beginn einer nächstfolgenden Lastregulierphase. Der Zähler W beginnt mit seinen kontinuierlich periodisch wiederholten Zählvorgängen also auf der Vergleisbasis eines solchen Vergleichswertes, der gegenüber dem weiter oben erwähnten, rechnerisch ermittelten Belastbarkeits-Konstantwert wesentlich aktueller ist. Dieser zu Beginn einer neuen Lastregulierphase in Zähler W vorliegende Vergleichswert ist derjenige, der vorlag, als bei der vorhergehenden Lastregulierphase die Grenze von Überlast zu Nicht-Überlast durchschritten wurde. Dieser von Lastregulierphase zu Lastregulierphase gespeicherte Vergleichwert entspricht also der jeweils bestehenden Betriebssituation wesentlich mehr als der rechnerisch ermittelte Belastbarkeits-Konstantwert. Die nach einer Initialisierung erneut einsetzende Regelung des Vergleichswertes geht also jeweils von einem Wert aus, der der aktuellen Betriebssituation, deren verschiedene Möglichkeiten bereits einleitend detailliert erörtert wurden, wesentlich näher kommt als der Belastbarkeits-Konstanswert. Dieser von Lastregulierphase zu Lastregulierphase gespeicherte Wert dient als Normalwert. - Darüber hinaus ist es auch möglich, in der beschriebenen Weise im Speicher gespeicherte Vergleichswerte über eine Mehrzahl von Lastregulierphasen hinweg zu mitteln und einen entsprechenden Mittelwert als Normalwert zu verwenden. In diesem Fall ist der Speicher s zusätzlich ein Mittelwertsbildner, der aus einem am Ende einer Lastregulierphase bereits von vorhergehenden Lastregulierphasen her gespeicherten Wert und dem dann vom Speicher S übernommenen neuen Vergleichswert einen Mittelwert bildet.

**Patentansprüche**

1. Schaltungsanordnung für Fernmeldeanlagen, insbesondere Fernsprechvermittlungsanlagen, in denen zentrale und/oder teilzentrale informationsverarbeitende Schaltwerke mit einer hinsichtlich der Informations-Verarbeitungskapazität begrenzten Leistungsfähigkeit, sowie Meßeinrichtungen (B) zur Bestimmung der Belastbarkeit solcher Schaltwerke vorgesehen sind, die die stets schwankende Belastung über Zeiträume integrieren, die jeweils groß genug sind, um ein Bestimmungsergebnis mit ausreichender Ergebnisgenauigkeit zu gewährleisten, und in denen eine einer Ermittlung der Informationsverarbeitungs-Verkehrsbelastung jeweils eines Schaltwerkes und einer Erkennung und Abwehr von Informationsverarbeitungs-Verkehrsüberlastungen dienende Zähleinrichtung (W) mit möglichst geringem Zeitverzug einen aktuellen und durch Vergleich jeweils eines periodisch wiederholt gewonnenen Zählergebnisses mit dem von ihr empfangenen und in ihr gespeicherten Bestimmungsergebnis sich ergebenden Momentanwert der Informations-Verkehrsbelastung liefert, um bei einem Anwachsen der laufenden Zählergebnisse über das Bestimmungsergebnis solche Überlastungen verzögerungsarm durch Abweisung von Informationsverarbeitungsaufträgen abzuwehren, und in denen nach Abwehr einer Informationsverarbeitungs-Verkehrsüberlastung und nach einem Absinken der periodisch gewonnenen Zählergebnisse und einem während einer bestimmten Mindest-Karenzzeit ununterbrochenen Verbleiben derselben unter dem Bestimmungsergebnis, während der für das für die Belastbarkeit maßgebende Bestimmungsergebnis aufgrund des Rückganges der Belastung zunehmend höhere Werte ermittelt werden, die Erzeugung und/oder Weitergabe und/oder Auswertung des Bestimmungsergebnisses - letztere durch laufenden Vergleich der periodisch wiederholt gewonnenen Zählergebnisse mit dem Bestimmungsergebnis - unterbrochen wird, und in denen das zuletzt ermittelte und in der Zähleinrichtung (W) gespeicherte Bestimmungsergebnis durch einen nach dem Abwehrvorgang unverändert bleibenden niedrigeren Normalwert ersetzt wird, bis aufgrund eines Staus an Informationsverarbeitungsaufträgen oder eines Anwachsens der laufenden Zählergebnisse über einen wesentlich oberhalb des Normalwertes liegenden Vergleichswert die Erzeugung und/oder Weitergabe und/oder Auswertung des Bestimmungsergebnisses erneut wirksam geschaltet wird, dadurch gekennzeichnet, daß beim Absinken der periodisch gewonnenen Zählergebnisse ein zur Zeit des Erreichens oder der Unterschreitung des Bestimmungsergebnisses gegebener Wert gespeichert wird, und daß nach Ablauf der Mindest-Karenzzeit, während der die periodisch gewonnenen Zählergebnisse unterhalb des Bestimmungsergebnisses verbleiben, dieser gespeicherte Wert als Normalwert dient, und daß bis zur Gewinnung eines neuen Bestimmungsergebnisses die periodisch gewonnenen Zählergebnisse auf der Basis dieses Normalwertes zur Ermittlung der laufenden Momentanwerte der Informations-Verkehrsbelastung dienen.

2. Schaltungsanordnung nach Anspruch 1, dadurch gekennzeichnet, daß als Normalwert ein Mittelwert aus einer Mehrzahl gespeicherter Werte dient.

## Claims

1. Circuit arrangement for telecommunication installations, espectally for telephone exchanges in which centralized and/or partly centralized information-processing switching devices with a limited capability with regard to the information-processing capacity are provided, as well as measuring facilities (B) for determining the loadability of such switching devices, which integrate the constantly fluctuating load over periods of time which are in each case great enough to ensure a determination result with adequate result accuracy, and in which a counting facility (W), serving to establish the information-processing traffic load in each case of a switching device and to detect and avert information-processing traffic overloads, supplies with as little time delay as possible an instantaneous value of the information traffic load which is current and is produced by comparison in each case of a periodically repeatedly obtained counting result with the determination result received by it and stored in it, in order to avert without great delay such overloads in the event of an increase in the continuous counting results over the determination result by the rejection of information-processing orders, and in which, after aversion of an information-processing traffic overload and after a dropping of the periodically obtained counting results and an uninterrupted remaining of the same below the determination result during a certain minimum waiting time, during which increasingly higher values are established for the determination result deciding on loadability, due to the return of the load, the generation and/or relaying and/or evaluation of the determination result - the latter by continuous comparison of the periodically repeatedly obtained counting results with the determination result - is interrupted, and in which the determinatton result which is last established and stored in the counting facility (W) is replaced by a lower normal value, remaining unchanged after the aversion operation, until the generation and/or relaying and/or evaluation of the determination results is reactivated due to a build-up of information-processing orders or an increase in the continuous counting results over a comparative value lying substantially above the normal value, characterized in that, upon dropping of the periodically obtained counting results, a value existing at the time the determination result was reached or undershot is stored, and in that, after elapse of the minimum waiting time, during which the periodically obtained counting results remain below the determination result, this stored value serves as normal value, and in that until a new determination result is obtained, the periodically obtained counting results on the basis of this normal value serve to establish the continuous instantaneous values of the information traffic load.

2. Circuit arrangement according to Claim 1, characterized in that an average value of a multiplicity of stored values serves as normal value.

## Revendications

1. Montage pour des installations de télécommunications, notamment des centraux téléphoniques, dans lesquelles il est prévu des unités centrales de commutation et/ou des unités partiellement centrales de commutation, qui traitent les informations et possèdent une capacité potentielle limitée de traitement des informations, ainsi que des dispositifs de mesure (B) qui servent à déterminer la capacité de charge de telles unités de commutation et intègrent la charge, qui varie en permanence, pendant des intervalles de temps suffisamment étendus pour garantir un résultat de détermination présentant une précision suffisante, et dans lesquelles un dispositif de comptage (W), qui est utilisé pour déterminer la charge en trafic de traitement d'informations d'une unité respective de commutation, identifier des surcharges en trafic de traitement d'informations et lutter contre de telles surcharges, délivre, avec un retard aussi faible que possible, une charge instantanée actuelle de la charge en trafic d'informations, obtenue par comparaison d'un résultat respectif de comptage, obtenu d'une manière répétée périodiquement, au résultat de détermination reçu par ce dispositif de comptage et mémorisé dans ce dernier, afin de lutter avec une faible retard contre de telles surcharges, lors d'une augmentation du résultat courant de comptage au-delà du résultat de détermination, au moyen d'un rejet d'ordres de traitement d'informations, et dans lesquelles, après.une lutte contre une surcharge de trafic en traitement d'informations et après une diminution des résultats de comptage obtenus périodiquement et après une durée, pendant laquelle ces résultats de comptage se maintiennent au-dessous du résultat de détermination, et qui est ininterrompue pendant un temps de carence minimum déterminé, pendant lequel des valeurs de plus en plus élevées sont déterminées pour le résultat de détermination, qui est déterminant pour la capacité de charge, en raison de la régression de la charge, la production et/ou la retransmission et/ou l'évaluation du résultat de détermination - cette évaluation étant réalisée au moyen d'une comparaison continue des résultats de comptage obtenus de façon répétée périodiquement, au résultat de détermination - sont interrompues, et dans lesquelles le résultat de détermination, qui a été déterminé en dernier lieu et est mémorisé dans le dispositif de comptage (W), est remplacé par une valeur normale inférieure, qui reste inchangée après l'opération de lutte, jusqu'à ce que, sur la base d'une accumulation d'ordres de traitement d'informations ou d'un accroissement des résultats courants de comptage au-delà d'une valeur de référence nettement supérieure à la valeur normale, la production et/ou la retransmission et/ou l'évaluation du résultat de détermination soient à nouveau mises en oeuvre, caractérise par le fait que lors de la diminution des résultats de comptage obtenus périodiquement, une valeur, déterminée à l'instant où le résultat de détermination est atteint ou dépassé par valeurs inférieures, est mémorisée et qu'après l'écoulement du temps de carence minimum, pendant lequel les résultats de comptage obtenus périodiquement restent au-dessous du résultat de détermination, cette valeur memorisée est utilisée en tant que valeur normale, et que, jusqu'a l'obtention d'un nouveau résultat de détermination, les résultats de comptage obtenus périodiquement sont utilisés, sur la base de cette valeur normale, pour déterminer les valeurs instantanées courantes de la charge en trafic d'informations.

2. Montage suivant la revendication 1, caractérisé par le fait qu'on utilise, comme valeur normale, une valeur moyenne formée à partir d'une multiplicité de valeurs mémorisées.

EP 0 176 764 B1